(19) Europäisches Patentamt
European Patent Office
Office européen des brevets

(11) EP 1 634 915 B1

(12) EUROPÄISCHE PATENTSCHRIFT

(45) Veröffentlichungstag und Bekanntmachung des Hinweises auf die Patenterteilung:
**25.01.2012 Patentblatt 2012/04**

(51) Int Cl.:
***C08K 5/1515*** *(2006.01)* ***C08J 5/18*** *(2006.01)*

(21) Anmeldenummer: **05019173.3**

(22) Anmeldetag: **03.09.2005**

(54) **Hydrolysebeständige Folie aus einem Polyester mit Hydrolyseschutzmittel sowie Verfahren zu ihrer Herstellung und ihre Verwendung**

Hydrolysis resistant polyester film, method for its preparation and use

Film de polyester résistant à l'hydrolyse, son procédé de production et son utilisation

(84) Benannte Vertragsstaaten:
**DE FR GB IT LU TR**

(30) Priorität: **10.09.2004 DE 102004044325**

(43) Veröffentlichungstag der Anmeldung:
**15.03.2006 Patentblatt 2006/11**

(73) Patentinhaber:
- **Mitsubishi Polyester Film GmbH**
  **65203 Wiesbaden (DE)**
- **Schäfer Additivsysteme GmbH**
  **67122 Altrip (DE)**

(72) Erfinder:
- **Kliesch, Holger, Dr.**
  **65462 Ginsheim-Gustavsburg (DE)**
- **Kuhmann, Bodo**
  **65594 Runkel (DE)**
- **Kiehne, Thorsten, Dr.**
  **Nagahama**
  **Shiga, 526-0031 (JP)**
- **Fischer, Ingo**
  **65558 Heistenbach (DE)**
- **Hilkert, Gottfried, Dr.**
  **55291 Saulheim (DE)**
- **Schäfer, Volker, Dr.**
  **67122 Altrip (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 371 681** **WO-A-2004/069912**
**US-A- 4 540 729**

- **DATABASE WWW.COGNIS.COM 'Edenol 81'**
- **DATABASE WWW.CHEMTURA.COM 'Drapex 6.8'**

Bemerkungen:
Die Akte enthält technische Angaben, die nach dem Eingang der Anmeldung eingereicht wurden und die nicht in dieser Patentschrift enthalten sind.

EP 1 634 915 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine hydrolysebeständige biaxial orientierte Folie aus einem Polyester, deren Dicke bevorzugt im Bereich von 0,4 bis 500 μm liegt. Die Folie enthält mindestens ein Hydrolyseschutzmittel auf Basis von epoxidierten Fettsäureglyceriden gemäß Anspruch 1 und zeichnet sich durch ihre geringe Hydrolysegeschwindigkeit aus. Die Erfindung betrifft ferner ein Verfahren zur Herstellung der Folie sowie ihre Verwendung.

Folien aus Polyestern im angegebenen Dickenbereich sind hinreichend bekannt. Nachteil von unstabilisierten Polyesterfolien ist jedoch ihre Hydrolyseneigung, insbesondere bei Temperaturen oberhalb der Glastemperatur des jeweiligen Polyesters. Unter Hydrolyseneigung wird hierbei die Eigenschaft des Polyesters verstanden, unter feuchten Bedingungen hydrolytisch abzubauen, welches beispielsweise an einer Reduzierung des IV- bzw. SV-Wertes erkennbar ist. Dies ist insbesondere bei Anwendungen mit höherer Temperaturbeanspruchung wie in Folienkondensatoren, Kabelummantelungen, Flachbandkabeln, Motorschutzfolien, aber auch in Langzeitanwendungen wie in Verglasungen und Außenanwendungen ein limitierender Faktor für die Anwendung von Polyesterfolien.

Besonders ausgeprägt ist die Hydrolyseneigung bei aliphatischen Polyestern, aber auch bei aromatischen Polyestern wie PBT und PET. Wenn die Hydrolyseneigung von PET zu groß für die Anwendung wird, muss man auf das noch etwas hydrolysestabilere PEN zurückgreifen oder sogar auf andere Polymere wie z. B. Polyetherimide oder Polyimide. Diese sind jedoch deutlich teurer als PET und deshalb häufig aus wirtschaftlichen Gründen keine Lösung.

Es wurde deshalb bereits vorgeschlagen, die Hydrolysestabilität von biaxial orientierte Polyesterfolien durch die Einarbeitung von Hydrolysestabilisatoren zu verbessern.

Hydrolysebeständigere Polyesterrohstoffe, die durch Verwendung von Carbodiimiden erhalten werden, sowie daraus hergestellte Fasern und Folien sind bekannt (US-A-5,885,709, EP-A-0 838 500, CH-A-621 135). Folien, die aus solchen Rohstoffen hergestellt werden, neigen jedoch sowohl in der Herstellung als auch in der späteren Verwendung zu Ausgasungen von Isocyanaten und anderen schleimhautreizenden bzw. gesundheitsschädlichen Neben- und Abbauprodukten. Diese ist bei flächigen Gebilden wie Folie mit großer Oberfläche ein weit größeres Problem als bei Spritzgussteilen oder ähnlichem.

Hydrolysestabilisatoren auf Basis von Epoxygruppen führen ebenfalls zu einer Hydrolysestabilisierung und sind beispielsweise in der EP-A-0 292 251 oder US-A-3,657,191 beschrieben. Diese Verbindungen basieren jedoch auf der Erzeugung von Oxiranringen mittels Epichlorhydrin und neigen u. a. aufgrund ihrer endständigen Epoxygruppen bei Erhitzung zum Abspalten niedermolekularer toxischer Verbindungen, so dass ähnliche Probleme wie bei der Verwendung von Carbodiimiden mit dem Einsatz dieser Substanzen verbunden sind. Außerdem ist ihre Einbindung in die Polyestermatrix ungenügend, was zu langen Reaktionszeiten und bei verstreckten Polyesterfolien zu einer hohen unerwünschten Trübung führt.

Außerdem haben bekannte Hydrolysestabilisatoren wie Carbodiimide und andere Substanzen wie die in der EP-A-0 292 251 beschriebenen den Nachteil, dass sie teilweise zu starken Molekulargewichtszunahmen (Viskositätsanstieg) im Polymer während der Extrusion führen und so den Extrusionsprozess instabil und schwer beherrschbar machen.

Aufgabe der vorliegenden Erfindung ist es, einen hydrolysebeständigen Polyesterrohstoff zur Verfügung zu stellen, der die beschriebenen Nachteile des Standes der Technik vermeidet.

Die Aufgabe wird gelöst durch eine Polyesterfolie, welche neben Polyester bevorzugt 0,1 - 20 Gew.-% (bezogen auf das Gewicht der Folie) eines Hydrolysestabilisators auf Basis von epoxidierten Fettsäureglyceriden enthält.

Die biaxial orientierte Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PBT, PEN und PTT sowie deren Mischungen und Co-Polyester bevorzugt sind.

Zur Herstellung der Polyester können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA) auch Isophthalsäure (IPA), trans- und/oder cis-1,4-Cyclohexandimethanol (c-CHDM, t-CHDM oder c/t-CHDM) und andere geeignete Dicarbonsäurekomponenten (oder Dicarbonsäureester) und Diolkomponenten verwendet werden.

Bevorzugt sind hierbei Polymere, bei denen die Dicarbonsäurekomponente zu 90 Gew.-% und mehr, insbesondere zu 95 Gew.-% (bezogen auf die Dicarbonsäurekomponente) und mehr, aus TA besteht. Bevorzugt sind weiterhin Thermoplaste, bei denen die Diolkomponente zu 90 Gew.-% (bezogen auf die Diolkomponente) und mehr, insbesondere zu 93 Gew.-% und mehr, aus EG besteht. Bevorzugt sind auch Polymere, bei denen der Diethylenglycolanteil am Gesamtpolymer im Bereich von 0,5 bis 2 Gew.-% liegt. Bei allen vorgenannten Mengenangaben bleibt das Hydrolyseschutzmittel unberücksichtigt.

Geeignete Polyester sind auch aliphatische Polyester wie Polyhydroxybutyrat (PHB) und sein Copolymer mit Polyhydroxyvalerat (PHV), polyhydroxybutyrat-valerat (PHBV), Poly(ε-Caprolacton) (PCL), SP 3/6, SP 4/6 (bestehend

aus 1,3-Propandiol/Adipat bzw.1,4-Butandiol/Adipat), Polycaprolactam bzw. allgemein adipinsäurehaltige Polyester und die Ester anderer aliphatischer Carbonsäuren.

Die Folie gemäß der Erfindung kann weiterhin anorganische oder organische Partikel, die zur Einstellung der Oberflächentopographie oder Optik benötigt werden, enthalten. Die Menge der eingesetzten Partikel ist abhängig von den verwendeten Substanzen und ihrer Partikelgröße. Letztere liegt im allgemeinen im Bereich von 0,01 bis 30,0, vorzugsweise 0,1 bis 5,0, und insbesondere 0,3 bis 3,0 µm.

Geeignete Verbindungen zur Erzielung der Rauheit sind z. B. Kalziumcarbonat, Apatit, Siliziumdioxid, Titandioxid, Aluminiumoxid, vernetztes Polystyrol, vernetztes PMMA, Zeolithe und andere Silikate wie Aluminiumsilikate. Diese Verbindungen werden im allgemeinen in Mengen von 0,05 bis 5 Gew.-%, vorzugsweise 0,1 bis 0,6 Gew.-%, (bezogen auf das Gewicht der Folie) eingesetzt.

Neben den erwähnten Additiven kann die Folie zusätzlich weitere Komponenten wie Flammschutzmittel und/oder Radikalfänger und/oder andere Polymere wie Polyetherimide enthalten.

Die erfindungsgemäße Folie enthält einen Hydrolysestabilisator, der bevorzugt über die so genannte Masterbatch-Technologie direkt bei der Folienherstellung zudosiert wird, wobei der Anteil des Hydrolysestabilisators bevorzugt im Bereich von 0,1 bis 20,0 Gew.-%, vorzugsweise von 1,0 bis 6,0 Gew.-%, und besonders bevorzugt 1,5 - 4,5 Gew.-%, bezogen auf das Gewicht des kristallisierbaren Thermoplasten, liegt. Im Masterbatch beträgt der Anteil des Hydrolysestabilisators allgemein 2,0 bis 50,0 Gew.-%, bevorzugt 4,0 bis 20,0 Gew.-%, jeweils bezogen auf das Gesamtgewicht des Masterbatches.

Geeignete Hydrolysestabilisatoren sind Mischungen von Glycerinestern oder reine Glycerinester, wobei die Glyzerinester durch die folgende Formel beschrieben sind:

$$CH_2OR_1\text{-}CHOR_2\text{-}CH_2OR_3$$

wobei $R_1$, $R_2$ und $R_3$ gleich oder verschieden sind und die folgende Bedeutung haben:

**(1)** **(2)** **(3)**

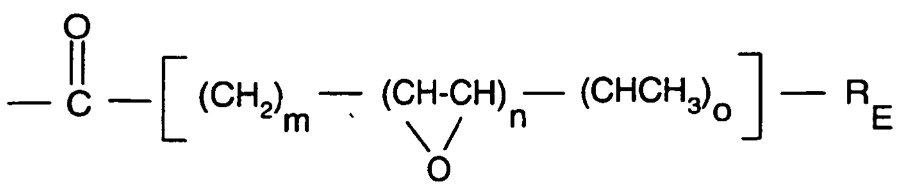

wobei
$R_E$= $CH_3$ oder H und
m = 1 - 40, bevorzugt 7 - 20, besonders bevorzugt 10 - 16,
n = 0 - 10, bevorzugt 1 - 4, besonders bevorzugt 2 - 3,
o = 0 - 4, bevorzugt 0, ist und
wobei
die Reihenfolge der einzelnen Methylen $(-CH_2)-$ (**1**), Epoxid (CHOCH)- (**2**) und $(CHCH_3)-$ (**3**) Gruppen beliebig ist, wobei aber bevorzugt mindestens 2 Methylengruppen (**1**) und besonders bevorzugt 7 Methylengruppen (**1**) auf die Carbonylgruppe folgen, bevor eine oder mehrere der Gruppen (**2**) oder (**3**) und wieder (**1**) folgen.

Bevorzugt sind Glyzerinestermischungen der oben genannten Art, wobei Reste $R_{1,2,3}$ mit m = 0 zu weniger als 30 Gew.-% und bevorzugt zu weniger als 20 Gew.-% und besonders bevorzugt zu weniger als 10 Gew.-%, (bezogen auf das Gewicht der Glyzerinestermischung) enthalten sind.

Einer oder mehrere der Reste $R_1$ und $R_2$ und $R_3$ können dabei auch
-H oder
den Rest einer ungesättigten (doppelbindungshaltigen, nicht vollständig epoxidierten) Fettsäure oder

$$-(PO_2)\text{-}O\text{-}(CH_2)_2\text{-}N(CH_3)_3$$

bedeuten, wobei solche Glyzerinester weniger bevorzugt sind und Glyzerinester, die diese Reste enthalten, in den erfindungsgemäßen Glyzerinestermischungen bevorzugt zu weniger als 20 Gew.-% und besonders bevorzugt zu weniger

als 5 Gew.-% enthalten sind.

Der Epoxidsauerstoffgehalt (Sauerstoff in Oxiranringen) ist bevorzugt größer 2 Gew.-% und besonders bevorzugt größer 3 Gew.-% (bezogen auf das Gewicht des Glyzerinesters).

Da es sich bei den eingesetzten Glyzerinestern bevorzugt um epoxidierte Öle biogenen Ursprungs handelt, enthalten diese neben den Glyzerinestern meist noch geringe Mengen anderer Substanzen (Proteine usw.). Der Anteil dieser Substanzen liegt bevorzugt bei unter 10 Gew.-% und besonders bevorzugt bei unter 2 Gew.-% (bezogen auf das Gewicht des Glyzerinesters).

Insbesondere der Anteil von Verbindungen mit einem Siedepunkt unter 210 °C liegt bevorzugt bei weniger als 5 und besonders bevorzugt bei weniger als 1 Gew.-% (bezogen auf das Gewicht des Glyzerinesters).

Die Säurezahl der eingesetzten Glyzerinester liegt bei unter 10 und besonders bevorzugt unter 2 mg KOH pro Gramm (DIN EN ISO 3682).

Für die Einarbeitung der Hydrolysestabilisatoren und für die Effektivität der Hydrolyseschutzwirkung hat es sich als günstig erwiesen, wenn die Viskosität der eingesetzten Hydrolysestabilisatoren größer als 500 mPa•s und besonders bevorzugt größer als 700 mPa•s bei 25 °C ist (DIN 53018). Geeignete epoxidierte Fettsäureglyceride der ober genannten Art sind z. B. epoxidiertes Sojabohnenöl, epoxidiertes Leinöl, epoxidiertes Rüböl, epoxidiertes Sonnenblumenöl und epoxidiertes Fischöl. Als besonders geeignet hat sich das Produkt ®Polybio Hystab10 der Firma Schäfer Additivsysteme GmbH (Altrip/Deutschland) erwiesen.

Der Hydrolysestabilisator wird dem Thermoplasten der Folie vorzugsweise über die Masterbatch-Technologie zugegeben. Dazu wird er zunächst in einem Trägermaterial dispergiert. Als Trägermaterial kommen der Thermoplast selbst, z. B. das Polyethylenterephthalat, oder auch andere Polymere, die mit dem Thermoplasten verträglich sind, in Frage. Nach der Zudosierung des Masterbatches zu dem Thermoplasten für die Folienherstellung schmelzen die Bestandteile des Masterbatches während der Extrusion und werden so in dem Thermoplasten gelöst bzw. fein dispergiert.

Die Herstellung des Masterbatches erfolgt zweckmäßigerweise nach einem der folgenden Verfahren:

1. Das Trägermaterial und das flüssige Hydrolyseschutzmittel werden in einem Extruder, bevorzugt einem Zweischneckenextruder, aufgeschmolzen, gemischt und dann durch eine Lochdüse extrudiert, abgeschreckt und granuliert. Bevorzugt ist dabei ein Verfahren, in dem das Polymer zuerst im Extruder aufgeschmolzen wird und nach der Entgasung das flüssige Hydrolyseschutzmittel direkt in die Schmelze dosiert wird.

2. Zugabe des Hydrolyseschutzmittels bei der Trägermaterialherstellung. Das Hydrolyseschutzmittel wird dabei direkt in die Leitung gepumpt, durch die das fertige Trägermaterial (Polymer) zu den Lochdüsen vor der Granulierung gepumpt wird. Diese Methode hat jedoch den Nachteil, dass die Durchmischung von Hydrolyseschutzmittel und Trägermaterial nicht so gut ist wie bei Methode 1. Eine Eindosierung in den Reaktionsreaktor bei der Trägermaterialherstellung führt aufgrund der in der Regel sehr hohen Viskositätsunterschiede meist zu noch schlechteren Durchmischungen.

Sofern die erfindungsgemäße Folie Partikel enthält, hat es sich als günstig erwiesen, wenn diese Partikel auch bereits in dem Hydrolyseschutzmittel-Masterbatch enthalten sind, da Partikel die Verteilung des Hydrolysestabilisators positiv beeinflussen. Als besonders günstig für die Verteilung hat es sich erwiesen, wenn das den Hydrolysestabilisator enthaltende Trägermaterial mindestens 0,3 bevorzugt mehr als 0,75 Gew.-% (bezogen auf das Masterbatch) $SiO_2$ und/oder $Al_2O_3$ Partikel enthält.

Weiterhin hat es sich als günstig erwiesen, wenn dem Masterbatch (bzw. dem Rohstoff), welches den Hydrolysestabilisator enthält, ein Stabilisator in Form eines Radikalfängers hinzugegeben wird, da dadurch dem Verlust an aktiven Oxirangruppen in der Extrusion durch radikalische Nebenreaktionen entgegengewirkt wird. Zweckmäßigerweise enthält die erfindungsgemäße Folie solche Stabilisatoren als Radikalfänger bzw. Thermostabilisatoren in Mengen von 50 bis 15.000 ppm, bevorzugt 100 bis 5.000 ppm, besonders bevorzugt 300 bis 1000 ppm, bezogen auf das Gewicht der Folie. Die dem Polyesterrohstoff zugegebenen Stabilisatoren werden beliebig ausgewählt aus der Gruppe der primären Stabilisatoren wie z. B. sterisch gehinderten Phenolen oder sekundären aromatischen Aminen oder der Gruppe der sekundären Stabilisatoren wie Thioether, Phosphite und Phosphonite sowie Zink-dibuthyl-dithiocarbamat oder synergistische Mischungen aus primären und sekundären Stabilisatoren. Bevorzugt sind die phenolischen Stabilisatoren. Zu den phenolischen Stabilisatoren zählen insbesondere sterisch gehinderte Phenole, Thio-bisphenole, Alkylidenbisphenole, Alkyl-phenole, Hydroxybenzyl-Verbindungen, Acyl-amino-phenole und Hydroxyphenylpropionate (entsprechende Verbindungen sind beispielsweise beschrieben in Kunststoffadditive", 2. Ausgabe, Gächter Müller, Carl Hanser-Verlag, und in Plastics Additives Handbook", 5. Ausgabe, Dr. Hans Zweifel, Carl Hanser-Verlag).

Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie ®Irganox 1222 der Firma Ciba Specialities, Basel, Schweiz, wobei in besonderen Ausführungsformen die Typen ®Irganox 1010, ®Irganox 1222, ®Irganox 1330 und ®Irganox 1425 oder Mischungen daraus.

Als besonders günstig hat es sich erwiesen, wenn dem Hydrolyseschutzmittel selbst vor der Einarbeitung in den Polyester Stabilisatoren hinzugegeben werden. Als besonders geeignet haben sich Irganox 1010 und Irgaphos 168 erwiesen. Der Gehalt sollte mindestens 50 ppm und bevorzugt mindestens 500 ppm betragen, wobei 5000 ppm nicht überschritten werden sollten.

Neben der Zugabe des Hydrolyseschutzmittels über die Masterbatchtechnologie kann das Hydrolyseschutzmittel auch direkt bei der Folienherstellung zugegeben werden. Dies führt jedoch nur zu guten Ergebnissen, wenn Zweischneckenextruder verwendet werden. Auch hier werden die besten Resultate hinsichtlich Folienqualität und Hydrolysewirkung erzielt, wenn das Hydrolyseschutzmittel direkt in die Schmelze im jeweiligen Extruder nach der Entgasungszone dosiert wird.

Die Folie gemäß der Erfindung wird im allgemeinen nach an sich bekannten Extrusionsverfahren hergestellt und ist ein oder mehrschichtig, wobei der Hydrolysestabilisator bevorzugt in allen Schichten enthalten ist, wobei auch Ausführungen möglich sind, in denen nicht alle Schichten mit dem Hydrolysestabilisator ausgerüstet sind.

Im Rahmen eines dieser Verfahren wird so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird. Im Bereich der Extrusion hat es sich dabei als günstig erwiesen wenn Temperaturen von 295 °C nicht überschritten werden. Besonders günstig ist es, wenn der Bereich der Düse und speziell der Bereich der Düsenlippe und nahe daran nicht wärmer als 290 °C, bevorzugt nicht wärmer als 285 °C und besonders bevorzugt nicht wärmer als 275 °C sind.

Die biaxiale Verstreckung wird im allgemeinen sequentiell durchgeführt. Dabei wird vorzugsweise erst in Längsrichtung (d. h. in Maschinenrichtung, = MD-Richtung) und anschließend in Querrichtung (d. h. senkrecht zur Maschinenrichtung, = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längs- und auch die Querstreckung bei $T_g$ + 10 °C bis $T_g$ + 60 °C ($T_g$ = Glastemperatur der Folie) durchgeführt. Das Längsstreckverhältnis liegt allgemein im Bereich von 2,0 : 1 bis 6,0 : 1, vorzugsweise von 3,0 : 1 bis 4,5 : 1. Das Querstreckverhältnis liegt allgemein im Bereich von 2,0 : 1 bis 5,0 : 1, vorzugsweise von 3,0 : 1 bis 4,5 : 1, und das der gegebenenfalls durchgeführten zweiten Längs- und Querstreckung liegt bei 1,1 : 1 bis 5,0 : 1.

Die erste Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3,0 ist.

Bei der nachfolgenden Thermofixierung wird die Folie etwa 0,1 bis 10 s lang bei einer Temperatur von 150 °C bis 260 °C, vorzugsweise 200 bis 245 °C gehalten. Anschließend an beziehungsweise beginnend in der Thermofixierung wird die Folie um 0 bis 15 %, vorzugsweise um 1,5 bis 8 %, in Quer- und gegebenenfalls auch in Längsrichtung relaxiert und die Folie in üblicher Weise abgekühlt und aufgewickelt.

Eine auf diese Weise hergestellte Folie weist eine deutlich geringere Hydrolyseneigung sowohl bei Raumtemperatur als auch bei Temperaturen bis 210 °C als eine unmodifizierte Polyesterfolie auf. Die Stabilisierung ist dabei weitgehend unabhängig von der Foliendicke und der Temperatur in einem Messbereich von 25 - 210 °C. So weist beispielsweise eine 2 μm PET-Folie (DEG-Gehalt 1 Gew.-% und Start-SV-Wert von 720) mit 2 Gew.-% eines Hydrolysestabilisators aus epoxidiertem Leinöl mit einem Epoxidsauerstoffgehalt von 8 Gew.-% nach 96 h im Autoklaven bei Wasserdampfsättigung und 110 °C noch einen SV-Wert von 500 auf und ist damit noch mechanisch stabil, während eine unstabilisierte Folie nach dieser Zeit bereits unter SV 400 abgefallen war und damit so gut wie keine Biegebruchfestigkeit mehr aufweist. Die stabilisierte Folie hält 80 % länger unter den genannten Bedingungen aus, bis sie die kritische Grenze von 400 SV-Einheiten erreicht. Denselben relativen Zeitgewinn findet man auch bei 80°C und bei 170 °C.

Besonders überraschend war, dass sich trotz der guten Langzeithydrolysestabilisierung kein unerwünschter Viskositätsaufbau im Extruder zeigte und bei der Folienherstellung kein erhöhtes Gel- oder Stippenniveau beobachtet wurde.

Folien, die mittels der genannten Hydrolysestabilisatoren stabilisiert werden, eignen sich hervorragend zur Herstellung von Produkten, die Polyesterfolien enthalten und entweder für eine lange Lebensdauer (größer 1 Jahr) ausgelegt sind, die während ihres Einsatzes mit höheren Temperaturen (größer 80 °C), insbesondere bei hoher Feuchte, konfrontiert werden, und für Außenanwendungen.

So eignen sie sich hervorragend zur Herstellung von Folienkondensatoren (bevorzugter Dickenbereich 0,3 - 12 μm). Diese können auf den bekannten konventionellen

Wegen und Prozessabläufen (u. a. Metallisierung, Konfektionierung, Wickeln, Schopierung, Kontaktierung, Becherverguss usw.) hergestellt werden und weisen gegenüber den herkömmlichen Polyesterfolienkondensatoren eine deutlich erhöhte Lebensdauer auf und führen im Gegensatz zu schon beschriebenen Kondensatoren mit Carbodiimidstabilisatoren auch bei starkem Erhitzen nicht zur Emission von gesundheitsschädlichen Isocyanaten. Für die Herstellung von Kondensatoren hat es sich als günstig erwiesen, wenn die Folien einen Längsschrumpf von weniger als 4 % und einen Querschrumpf von weniger als 1 % bei 200 °C aufweisen, da sie sich dann besonders gut zur Herstellung von SMD-Kondensatoren eignen.

Eine weitere Anwendung sind z. B. Flachbandkabel in Automobilen. Hierzu werden Folien (bevorzugt 12-200 μm) mittels eines Heißsiegelklebers (z. B. EKP-Heißsiegellack 230 der Firma EKP Verpackungslacke GmbH (Deutschland)) mit Kupfer laminiert. Verbunde, die Polyester mit Hydrolyseschutzmittel enthalten, halten dabei den in Automobilen auftretenden mechanischen Belastungen (u. a. Vibrationen) weit länger stand als Verbunde mit herkömmlichen Polyesterfolien. Hierbei ist jedoch darauf zu achten, dass auch die Kleber weitgehend hydrolyseunempfindlich sind (bei polyesterbasierten Klebern empfiehlt sich eine Ausrüstung mit den genannten Hydrolysestabilisatoren).

In den nachfolgenden Ausführungsbeispielen erfolgt die Messung der einzelnen Eigenschaften gemäß den angeführten Normen bzw. Verfahren.

**Messmethoden**

**Standardviskosität (SV)**

Die Standardviskosität SV wird - angelehnt an DIN 53726 - durch die Messung der relativen Viskosität $\eta_{rel.}$ einer 1%igen Lösung in Dichloressigsäure (DCE) in einem Ubbelohde Viskosimeter bei 25 °C gemessen. Der SV-Wert ist wie folgt definiert: SV= $(\eta_{rel.} -1) \cdot 1000$

**Rauheit**

Die Rauheit Ra der Folie wird nach DIN 4768 bei einem Cut-off von 0,25 mm bestimmt.

**Schrumpf**

Der thermische Schrumpf wurde an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\,TD}$ und $L_{0\,MD}$) und werden 15 min bei der angegeben Schrumpfungstemperatur (hier 200 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \cdot (L_{0\,MD} - L_{MD}) / L_{0\,MD}$$

$$\text{Schrumpf [\%] TD} = 100 \cdot (L_{0\,TD} - L_{TD}) / L_{0\,TD}$$

**Messung der Trübung**

Die Messung erfolgt an dem Hazegard Hazemeter XL-211 der Fa. BYK Gardner. Das Messgerät ist 30 min vor der Messung einzuschalten. Es ist darauf zu achten, dass der Lichtstrahl durch die Kugel zentrisch an die Austrittsöffnung geht.

<u>Herstellung, Form und Anzahl der Proben</u>

Aus der zu untersuchenden Folie werden je 5 Proben mit einer Größe von 100 • 100 mm ausgeschnitten. Die Längs- und Querrichtung werden am Rand gekennzeichnet, da die Messungen in beiden Maschinenrichtungen erfolgen.

Messung der Trübung

- Schalter 1 "OPEN" drücken
- Schalter 2 auf "X10" einstellen und mit dem "Zero"-Knopf Digitalanzeige auf 0.00 kalibrieren
- Umschalten des Schalters 1 auf "Referenz" und des Schalters 2 auf "X1"
- Mit dem "Calibrate"-Knopf Digitalanzeige auf 100 bringen
- Probe in Längsrichtung einlegen
- Anzeigewert für die Transparenz ablesen
- Die Digitalanzeige mit dem "Calibrate"-Knopf auf 100 kalibrieren
- Schalter 1 auf "OPEN" stellen
- Anzeigewert für die Trübung in Längsrichtung ablesen
- Probe in Querrichtung drehen
- Anzeigewert für die Trübung in Querrichtung ablesen

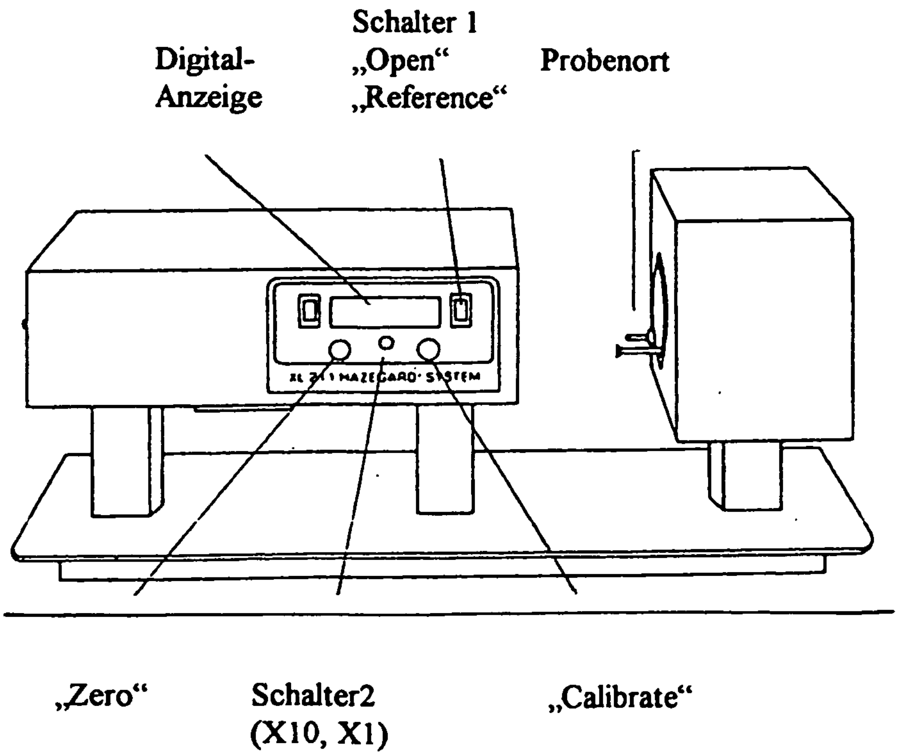


Auswertung

Die Trübung erhält man durch die Mittelung der jeweiligen 5 Einzelwerte (Längs und Quer).

**Autoklavierung**

Die Folien (10•2 cm) werden an einem Draht in den Autoklaven Adolf Wolf SANOklav Typ: ST-MCS-204 gehängt und der Autoklav mit 2 l Wasser befüllt. Nach dem Schließen des Autoklaven wird dieser erhitzt. Bei 100 °C wird die Luft durch den Wasserdampf über das Ablassventil verdrängt. Dies wird nach ca. 5 min geschlossen, worauf die Temperatur auf 110°C und der Druck auf 1,5 bar ansteigt. Nach 24 h wird der Autoklav automatisch abgeschaltet und nach Öffnen des Ablassventils die Folien entnommen. Von diesen wird dann der SV-Wert bestimmt.

**Beispiele**

Rohstoffherstellung (hydrolysestabilisiertes Polymer)

Polyethylenterephthalat mit Hydrolysestabilisator 1

Ein Polyethylenterephthalatrohstoff mit 10.000 ppm Syloblc 44H (Grace) und 5000 ppm Aerosil TT600 (Degussa) sowie 3000 ppm Irganox 1010 (Ciba) und einem DEG-Gehalt von 1 Gew.-% wird in einem Zweischneckenextruder der Firma Coperion aufgeschmolzen und mit 8 Gew.-% epoxidiertem Leinöl mit 8 Gew.-%-Epoxidsauerstoff (Viskosität 750 mPa•s, Säurezahl 1,5 mg KOH/g) gemischt. Der Hydrolysestabilisator wurde dabei mittels einer Pumpe direkt in die Schmelze nach der Entgasungszone dosiert. SV-Wert 785

Polyethylenterephthalat mit Hydrolysestabilisator 2

Polyethylenterephthalat RT49 der Firma Invista wurde in einem Zweischneckenextruder der Firma Coperion aufgeschmolzen und mit 4 Gew.-% ®Polybio Hystab 10 (Epoxidsauerstoff 8,5 Gew.-%, Viskosität 900 mPa•s, Säurezahl 0,9 mg KOH/g) der Firma Schäfer Additivsysteme gemischt. Dem Hydrolysestabilisator wurden 200 ppm Irganox 1010 und 100 ppm Irgaphos 168 zugegeben. Der Hydrolysestabilisator Hystab10 wurde dann mittels einer Pumpe direkt in die Schmelze nach der Entgasungszone dosiert. SV-Wert 789.

Weitere verwendete Rohstoffe

Rohstoff R1 PET (Typ RT49, Invista Deutschland), SV-Wert 790.

Masterbatch MB1 1,0 Gew.-% Sylobloc 44H, 0,50 Gew.-% Aerosil TT600 und 98,5 Gew.-% PET, SV-Wert 790. DEG-Gehalt von 1 %

Folienherstellung für Kondensatorfolie (Verfahren 1):

Thermoplast-Chips wurden gemäß den in den Beispielen angegebenen Verhältnissen gemischt und in einem Wirbelschichttrockner bei 155 °C für 1 min vorkristallisiert, anschließend für 3 h in einem Schachttrockner bei 150°C getrocknet und bei 278 °C extrudiert. Das geschmolzene Polymer wurde aus einer Düse über eine Abzugswalze abgezogen. Die Dicke dieser Vorfolie betrug 29 μm. Der Film wurde um den Faktor 3,8 in Maschinenrichtung bei 116 °C gestreckt und in einem Rahmen bei 110 °C eine Querstreckung um den Faktor 3,7 durchgeführt. Anschließend wurde die Folie bei 230 °C thermofixiert und in Querrichtung um 8 % bei Temperaturen von 200 - 180 °C relaxiert. Die Endfoliendicke betrug 2 μm.

Folienherstellung für Flachbandkabel (Verfahren 2):

Thermoplast-Chips wurden gemäß den in den Beispielen angegebenen Verhältnissen gemischt und bei 278 °C in einem Zweischneckenextruder (JapanSteelWorks) extrudiert. Das geschmolzene Polymer wurde aus einer Düse über eine Abzugswalze abgezogen. Die Dicke dieser Vorfolie betrug 530 μm. Der Film wurde um den Faktor 3,4 in Maschinenrichtung bei 116°C gestreckt und in einem Rahmen bei 110 °C eine Querstreckung um den Faktor 3,1 durchgeführt. Anschließend wurde die Folie bei 225 °C thermofixiert und in Querrichtung um 3 % bei Temperaturen von 200-180 °C relaxiert. Die Endfoliendicke betrug 50 μm.

Die Eigenschaften der hergestellten Folien sind aus der nachstehenden Tabelle zu entnehmen.

Tabelle

| | | Beispiel 1 | Beispiel 2 | Beispiel 3 | Vergleichsbeispiel 1 | Vergleichsbeispiel 2 |
|---|---|---|---|---|---|---|
| PET m. Hydrolyse-stabilisator 1 | in Gew.-% | 33 | | | | |
| PET m. Hydrolyse-stabilisator 2 | in Gew.-% | | 50 | 50 | | |

(fortgesetzt)

| | | Beispiel 1 | Beispiel 2 | Beispiel 3 | Vergleichsbeispiel 1 | Vergleichsbeispiel 2 |
|---|---|---|---|---|---|---|
| R1 | in Gew.-% | 66 | 40 | 40 | 75 | 90 |
| MB1 | in Gew.-% | | 10 | 10 | 25 | 10 |
| Verfahren | Nr. | 1 | 2 | 1 | 1 | 2 |
| Foliendicke | in µm | 2 | 50 | 2 | 2 | 50 |
| SV-Wert | | 761 | 775 | 782 | 763 | 787 |
| SV Wert nach 96 h bei 110 °C im Autoklav bei Wassersättigung | | 515 | 555 | 559 | 391 | 399 |

**Patentansprüche**

1. Biaxial orientierte Polyesterfolie, **dadurch gekennzeichnet, dass** sie Polyester und einen Hydrolysestabilisator auf Basis von eppxidierten Fettsäureglyceriden enthält, wobei die Viskosität der epoxidierten Fettsäureglyceride größer ist als 500 mPa·s bei 25 °C, gemessen nach DIN 53018, und die Säurezahl der eingesetzten Glyzeride bei unter 10 mg KOH pro Gramm (DIN EN ISO 3682) liegt.

2. Polyesterfolie nach Anspruch 1, **dadurch gekennzeichnet, dass** die Folie ein- oder mehrschichtig ist.

3. Polyesterfolie nach Anspruch 2, **dadurch gekennzeichnet, dass** sie mehrschichtig ist.

4. Polyesterfolie nach Anspruch 3, **dadurch gekennzeichnet, dass** der hlydrolysestabilisator in allen Schichten der mehrschichtigen Folie vorhanden ist.

5. Polyesterfolie nach einem der Ansprüche 1 bis 4, **dadurch gekennzeichnet, dass** die Folie organische oder anorganische Partikel enthält.

6. Polyesterfolie nach einem der Ansprüche 1 bis, 5, **dadurch gekennzeichnet, dass** sie Flammschutzmittel und/ oder Radikalfänger enthält.

7. Polyesterfolie nach einem der Ansprüche 1 bis 6, **dadurch gekennzeichnet, dass** 0,1 bis 20,0 Gew.-% (bezogen auf des Gewicht der Folie) Hydrolysestabilisator vorhanden sind.

8. Polyesterfolie nach einem der Ansprüche 1 bis 7, **dadurch gekennzeichnet, dass** der Hydrolysestabilisator eine Mischung von epoxidierten Fettsäureglyceriden oder ein reines epoxidiertes Fettsäureglycerid ist, das durch die folgende Formel beschrieben ist:

$$CH_2OR_1\text{-}CHOR_2\text{-}CH_2OR_3$$

wobei $R_1$, $R_2$ und $R_3$ gleich oder verschieden sind und die folgende Bedeutung haben:

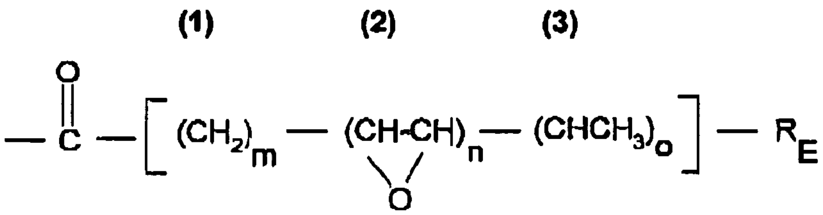

wobei
$R_E$= $CH_3$ oder H und
m = 1 - 40,
n = 0 - 10,
o = 0 - 4 ist und
wobei
die Reihenfolge der einzelnen Methylen ($CH_2$)- (1), Epoxid (CHOCH)- (**2**) und ($CHCH_3$)- (3) Gruppen beliebig ist, wobei aber mindestens 2 Methylengruppen (**1**) auf die Carbonylgruppe folgen, bevor eine oder mehrere der Gruppen (**2**) oder (**3**) und wieder (**1**) folgen und wobei der Epoxidsauerstoffgehalt des Glycerids 2 Gew.-% ist,

**9.** Polyesterfolie nach einem der Ansprüche 1 bis 7, **dadurch gekennzeichnet, dass** der Hydrolysestabilisator einen Epoxidsauerstoffgehalt von mindestens 2,0 Gew.-% aufweist.

**10.** Polyesterfolie nach einem der Ansprüche 1 bis 9, **dadurch gekennzeichnet, dass** die epoxidierten Fettsäureglyceride ausgewählt sind aus einer oder mehreren der folgenden Substanzen: epoxidiertes Sojabohnenöl, epoxidiertes Leinöl, epoxidiertes Rüböl, epoxidiertes Sonnenblumenöl und epoxidiertes Fischöl.

**11.** Polyesterfolie nach einem der Ansprüche 1 bis 10, **dadurch gekennzeichnet, dass** die epoxidierten Fettsäureglyceride biogenen Ursprungs sind und neben den epoxidierten Fettsäureglyceriden noch weniger als 10 Gew.-% (bezogen auf das Gewicht der epoxidierten Fettsäureglyceride) anderer Substanzen

**12.** Verfahren zur Herstellung einer Polyesterfolie nach Anspruch 1, **dadurch gekennzeichnet, dass** eine Schmelze, die Polyester und ein Masterbatch aus Polyester und einem Hydrolysestabilisator auf Basis von epoxidierten Fettsäureglyceriden enthält, durch eine Flachdüse extrudiert wird, die so erhaltene Folie zur Verfestigung auf einer oder mehreren Walze/n als weitgehend amorphe Vorfolie abgezogen und abgeschreckt wird, die Folie anschließend erneut erhitzt und biaxial gestreckt und die biaxial gestreckte Folie thermofixiert wird wobei die Viskosität der epoxidierten Fettsäureglyceride größer ist als 500 mPa·s bei 25 °C, gemessen nach DIN 53018, und die Säurezahl der eingesetzten Glyzerinester bei unter 10 mg KOH pro Gramm (DIN EN ISO 3682) liegt.

**13.** Verwendung einer Folie nach Anspruch 1 zur Herstellung von Folienkondensatoren, Kabelummantelungen, Flachbandkabeln oder Motorschutzfolien.

**14.** Verwendung einer Folie nach Anspruch 1 in Verglasungen und Außenanwendungen.

## Claims

**1.** A biaxially oriented polyester film which comprises polyester and comprises a hydrolysis stabilizer based on epoxidized fatty acid glycerides, the viscosity of the epoxidized fatty acid glycerides being greater than 500 mPa·s at 25 °C, measured to DIN 53018, and the acid number of the glycerides used being less than 10 mg KOH per gram (DIN EN ISO 3682).

**2.** The polyester film as claimed in claim 1, which is a single- or multilayer film.

**3.** The polyester film as claimed in claim 2, which is a multilayer film.

**4.** The polyester film as claimed in claim 3, wherein the hydrolysis stabilizer is present in all of the layers of the multilayer film.

**5.** The polyester film as claimed in any of claims 1 to 4, which comprises organic or inorganic particles.

**6.** The polyester film as claimed in any of claims 1 to 5, which comprises flame retardant and/or free-radical scavenger.

**7.** The polyester film as claimed in any of claims 1 to 6, wherein from 0.1 to 20.0 % by weight (based on the weight of the film) of hydrolysis stabilizer are present.

**8.** The polyester film as claimed in any of claims 1 to 7, wherein the hydrolysis stabilizer is a mixture of epoxidized fatty acid glycerides or a pure epoxidized fatty acid glyceride described by the following formula:

$CH_2OR_1$-$CHOR_2$-$CH_2OR_3$

where $R_1$, $R_2$ and $R_3$ are the same or different and are each defined as follows:

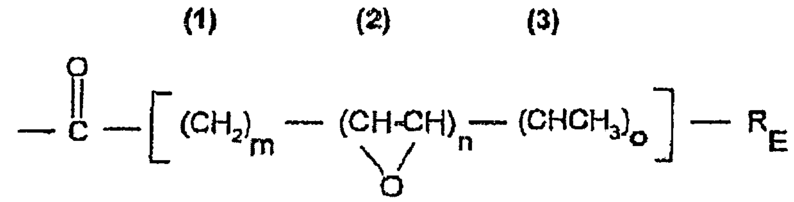

where
$R_E$ = $CH_3$ or H and
m = 1-40,
n = 0-10,
o = 0-4 and
where
the sequence of the individual methylene ($CH_2$)-(1), epoxide (CHOCH)- (2) and ($CHCH_3$)- (3) groups is as desired, but at least two methylene groups (1) follow the carbonyl group before one or more of the groups (2) or (3) and (1) again, and where the epoxide oxygen content of the glyceride is > 2 % by weight.

**9.** The polyester film as claimed in any of claims 1 to 7, wherein the hydrolysis stabilizer has an epoxy oxygen content of at least 2.0 % by weight.

**10.** The polyester film as claimed in any of claims 1 to 9, wherein the epoxidized fatty acid glycerides have been selected from one or more of the following substances: epoxidized soybean oil, epoxidized linseed oil, epoxidized rapeseed oil, epoxidized sunflower oil, and epoxidized fish oil.

**11.** The polyester film as claimed in any of claims 1 to 10, wherein the epoxidized fatty acid glycerides are of biogenic origin and, as well as the epoxidized fatty acid glycerides, also contain less than 10% by weight (based on the weight of the epoxidized fatty acid glycerides) of other substances.

**12.** A process for production of a polyester film as claimed in claim 1, wherein a melt which comprises polyester and comprises a masterbatch composed of polyester and of a hydrolysis stabilizer based on epoxidized fatty acid glycerides is extruded through a flat-film die, the resultant film is drawn off and quenched in the form of a substantially amorphous prefilm on one or more rolls for solidification, the film is then reheated and biaxially stretched, and the biaxially stretched film is heat-set, the viscosity of the epoxidized fatty acid glycerides being greater than 500 mPa·s at 25 °C, measured to DIN 53018, and the acid number of the glyceryl esters used being less than 10 mg KOH per gram (DIN EN ISO 3682).

**13.** The use of a film as claimed in claim 1 for production of film capacitors, cable sheathing, ribbon cables, or engine-protection films.

**14.** The use of a film as claimed in claim 1 in glazing and outdoor applications.

**Revendications**

**1.** Feuille de polyester orientée biaxialement, **caractérisée en ce qu'**elle contient du polyester et un stabilisant contre l'hydrolyse à base de glycérides d'acides gras époxydés, dans laquelle la viscosité du glycéride d'acide gras époxydé est supérieure à 500 mPa·s à une température de 25 °C, mesurée selon la norme DIN 53018, et l'indice d'acidité des glycérides utilisés est inférieur à 10 mg de KOH par gramme (norme DIN EN ISO 3682).

**2.** Feuille de polyester selon la revendication 1, **caractérisée en ce que** la feuille présente une ou plusieurs couches.

**3.** Feuille de polyester selon la revendication 2, **caractérisée en ce qu'**elle présente plusieurs couches.

**4.** Feuille de polyester selon la revendication 3, **caractérisée en ce que** le stabilisant contre l'hydrolyse est présent dans toutes les couches de la feuille à plusieurs couches.

**5.** Feuille de polyester selon l'une quelconque des revendications 1 à 4, **caractérisée en ce que** la feuille contient des particules organiques ou inorganiques.

**6.** Feuille de polyester selon l'une quelconque des revendications 1 à 5, **caractérisée en ce qu'**elle contient un agent ignifuge et/ou un piégeur de radicaux.

**7.** Feuille de polyester selon l'une quelconque des revendications 1 à 6, **caractérisée en ce qu'**elle contient 0,1 à 20,0 % en poids (par rapport au poids de la feuille) de stabilisant contre l'hydrolyse.

**8.** Feuille de polyester selon l'une quelconque des revendications 1 à 7, **caractérisée en ce que** le stabilisant contre l'hydrolyse est un mélange de glycérides d'acides gras époxydés ou est un glycéride d'acides gras époxydé pur, qui est décrit par la formule suivante :

$$CH_2OR_1\text{-}CHOR_2\text{-}CH_2OR_3$$

dans laquelle $R_1$, $R_2$ et $R_3$ sont identiques ou différents et ont la signification suivante :

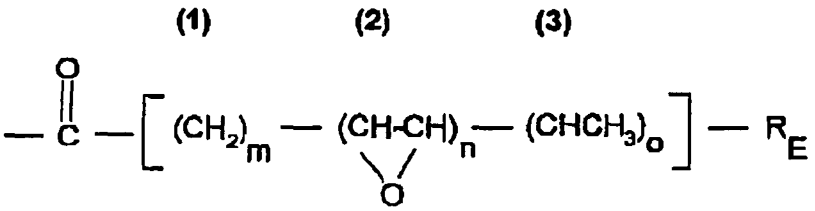

dans laquelle
$R_E$ représente $CH_3$ ou H et
m vaut 1 à 40,
n vaut 0 à 10,
o vaut 0 à 4, et
dans laquelle
l'ordre des groupements individuels méthylène ($CH_2$)-(1), époxyde (CHOCH)-(2) et ($CHCH_3$)-(3) est quelconque, dans laquelle au moins 2 groupements méthylène (1) suivent toutefois le groupement carbonyle avant que ne succèdent un ou plusieurs des groupements (2) ou (3), puis à nouveau (1), et dans laquelle la teneur en oxygène d'époxyde du glycéride est > 2 % en poids.

**9.** Feuille de polyester selon l'une quelconque des revendications 1 à 7, **caractérisée en ce que** le stabilisant contre l'hydrolyse présente une teneur en oxygène d'époxyde d'au moins 2,0 % en poids.

**10.** Feuille de polyester selon l'une quelconque des revendications 1 à 9, **caractérisée en ce que** les glycérides d'acides gras époxydés sont choisis parmi l'une ou plusieurs des substances suivantes : huile de fèves de soja époxydée, huile de lin époxydée, huile de navette époxydée, huile de tournesol époxydée et huile de poisson époxydée.

**11.** Feuille de polyester selon l'une quelconque des revendications 1 à 10, **caractérisée en ce que** les glycérides d'acides gras époxydés sont d'origine biogène et contiennent encore, outre les glycérides d'acides gras époxydés, moins de 10 % en poids (par rapport au poids des glycérides d'acides gras époxydés) d'autres substances.

**12.** Procédé pour la fabrication d'une feuille de polyester selon la revendication 1, **caractérisé en ce qu'**une masse fondue, qui contient un polyester et un mélange maître de polyester et d'un stabilisant contre l'hydrolyse à base de glycérides d'acides gras époxydés, est extrudée à travers une filière plate, la feuille obtenue de la sorte est extraite et brusquement refroidie à des fins de solidification sur un ou plusieurs cylindres pour donner une première feuille largement amorphe, la feuille est ensuite à nouveau chauffée et étirée biaxialement et la feuille étirée biaxialement

est soumise à une thermofixation, dans lequel la viscosité des glycérides d'acides gras époxydés est supérieure à 500 mPa.s à 25 °C, mesurée selon la norme DIN 53018, et l'indice d'acidité des esters de glycérol utilisés est inférieur à 10 mg de KOH par gramme (norme DIN EN ISO 3682).

**13.** Utilisation d'une feuille selon la revendication 1, pour la fabrication de condensateurs à feuilles, de câbles en ruban plat ou de feuilles de protection de moteur.

**14.** Utilisation d'une feuille selon la revendication 1 dans des vitrages et des applications en extérieur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5885709 A
- EP 0838500 A
- CH 621135 A
- EP 0292251 A
- US 3657191 A